**Europäisches Patentamt**

**European Patent Office**

**Office européen des brevets**

(19)

(11) Veröffentlichungsnummer: **0 117 267**
**B1**

(12) # EUROPÄISCHE PATENTSCHRIFT

(45) Veröffentlichungstag der Patentschrift:
**27.08.86**

(51) Int. Cl.⁴: **F 16 J 15/32,** F 16 J 15/42,
F 16 J 15/54

(21) Anmeldenummer: **83101894.0**

(22) Anmeldetag: **26.02.83**

(54) Dichtring.

(43) Veröffentlichungstag der Anmeldung:
**05.09.84 Patentblatt 84/36**

(45) Bekanntmachung des Hinweises auf die Patenterteilung:
**27.08.86 Patentblatt 86/35**

(84) Benannte Vertragsstaaten:
**AT BE CH DE FR GB IT LI LU NL SE**

(56) Entgegenhaltungen:
**EP - A - 0 012 133**
**BE - A - 623 206**
**CH - A - 283 170**
**DE - C - 930 961**

(73) Patentinhaber: **Firma Carl Freudenberg, Höhnerweg 4,
D-6940 Weinheim/Bergstrasse (DE)**

(72) Erfinder: **Forch, Hans, Sandbuckelweg 29,
D-6943 Birkenau 1 (DE)**

(74) Vertreter: **Weissenfeld-Richters, Helga, Dr.,
Höhnerweg 2, D-6940 Weinheim/Bergstrasse (DE)**

**Beschreibung**

Die Erfindung betrifft einen Dichtring, bestehend aus einem mit der Welle umlaufenden Innenring mit daran befestigter Dichtlippe, die bei Wellenstillstand federnd an dem Aussenring anliegt und sich bei Betriebsdrehzahl von letzterem abhebt, aus einem vorgeschalteten, verdrehsicher mit dem Innenring verbundenen Flansch mit axialen Durchlässen, die über die Stirnfläche verteilt münden und die jeweils von einer Vielzahl sich nach aussen erstreckender Durchlässe durchdrungen sind, die mit ihren Mündungen auf eine ringförmige, zum abgedichteten Raum hin offene Prallflächen des Aussenringes ausgerichtet sind.

Mit Dichtringen der vorstehend angesprochenen Art befasst sich die europäische Patentanmeldung 12133. Sie sind für die Abdichtung eines Luft-Flüssigkeitsgemisches bestimmt, insbesondere für die Abdichtung eines Ölnebels, wie häufig in den Kurbelräumen von Verbrennungsmotoren anzutreffen.

Das Funktionsprinzip von Dichtringen dieser Art beruht auf einer Phasentrennung des abzudichtenden Mediums in dem mit der Welle umlaufenden, in radialer und axialer Richtung porösen Flansch. Das abzudichtende Medium strömt über die dem abgedichteten Raume zugewandte Stirnfläche in das Porensystem des Flansches ein und wird in Umfangsrichtung entsprechend der Drehgeschwindigkeit des Flansches beschleunigt. Die dabei auf die Flüssigkeitsbestandteile ausgeübten Kräfte sind wesentlich grösser als die auf die Gasbestandteile ausgeübten Kräfte, und während erstere unverzüglich in radialer Richtung nach aussen ab- und in den abgedichteten Raum zurückgeschleudert werden, vermögen letztere den Flansch nahezu ungehindert in axialer Richtung zu durchströmen und zur Dichtfläche zu gelangen. Hier werden sie ebenfalls in radialer Richtung nach aussen abgelenkt und gelangen zurück in den abgedichteten Raum. Das darin befindliche Druckniveau ist unter Betriebsbedingungen stabil. Flüssigkeitsbestandteile vermögen die Dichtfläche erst bei nachlassender Drehzahl zu passieren, und eine Leckage wird in diesem Falle durch das Wirksamwerden der nachgeschalteten Lippendichtung verhindert.

Voraussetzung für eine gute Funktion der vorgenannten Dichtung ist der unmittelbare Berührungskontakt zwischen dem von axialen und radialen Durchlässen durchdrungenen Flansch und der aus dem Aussenring nach innen vorspringenden, ringförmigen Dichtfläche. Da der Flansch unter Betriebsbedingungen eine relative Drehbewegung ausführt, sind in der Dichtungszone Reibungskräfte zu überwinden, die neben einem erhöhten Energieverbrauch auch Verschleiss zur Folge haben und damit eine nur begrenzte Lebensdauer des beschriebenen Dichtringes.

US-A 32 56 027 nimmt Bezug auf eine im Betrieb abhebende Lippendichtung, der eine berührungslos arbeitende Fliehkraftdichtung in Richtung des abgedichteten Mediums vorgeschaltet ist. Letztere besteht aus einem mit der Welle umlaufenden Schaufelrad, und die das Schaufelrad auf der Aussenseite umgebende Prallfläche erstreckt sich in einer achsparallelen Richtung. Die auf die Prallfläche auftreffende Flüssigkeit wird dadurch nicht nur in Richtung des abgedichteten Raumes, sondern auch in Richtung des abzudichtenden Spaltes umgelenkt, was eine Benetzung der diesen begrenzenden, ruhenden Fläche und damit eine Leckage zur Folge hat. Die Abdichtung eines Gemisches aus einer Flüssigkeit und einem Gas wird nicht erwähnt.

Der Erfindung liegt die Aufgabe zugrunden, einen Dichtring zu entwickeln, der frei ist von unter Betriebsbedingungen aufeinandergleitenden Flächen und der eine gute Wirksamkeit in Bezug auf die Abdichtung eines Gemisches aus einer Flüssigkeit und einem Gas aufweist.

Diese Aufgabe wird erfindungsgemäss dadurch gelöst, dass die sich nach aussen erstreckenden Durchlässe des Flansches auf der druckabgewandten Seite in ihrem Querschnitt zu Kanälen erweitert sind, die durch eine Deckplatte und/oder eine in geringem axialen Abstand zugeordnete, nach innen vorspringende Verjüngung des Aussenringes abgeschlossen sind, dass die Kanäle gleichmässig auf dem Umfang verteilt münden und dass die Mündungen der Prallfläche des Aussenringes stumpfwinklig zugeordnet sind.

Bei der vorgeschlagenen Ausführung hat der Flansch im Gegensatz zu der Ausführung nach dem Stande der Technik keinerlei unmittelbaren Berührungskontakt mit dem Aussenring. Reibungskräfte können infolgedessen zu keinem Zeitpunkt wirksam werden. Sie entstehen lediglich während der Anlaufphase durch den Berührungskontakt zwischen der mit der Welle umlaufenden Dichtlippe und der zugeordneten Dichtfläche des Aussenringes. Diese beiden Funktionsteile sind insofern unentbehrlich, als bei Wellenstillstand und bei niederen Drehzahlen das angesprochene Prinzip noch nicht wirksam ist und sich erst bei Betriebsdrehzahl und darüber ergibt. Der kritische Bereich niedriger Drehzahlen wird jedoch beim Anlaufen von Motoren und Turbinen zumeist kurzfristig durchfahren, so dass der in dieser Situation auftretende Verschleiss an der Dichtlippe ausserordentlich gering ist.

Das abgedichtete Gas-Flüssigkeitsgemisch wird in dem Flansch in aufeinanderfolgenden Stufen in seine Komponenten zerlegt.

In den zu Kanälen erweiterten Durchlässen, die von freigesetztem Gas durchströmt werden, ergibt sich eine hohe, nach aussen gerichtete Strömungsgeschwindigkeit. Das aus den Mündungen der Kanäle austretende Gas prallt anschliessend unter einem stumpfen Winkel auf die ringförmige, zum abgedichteten Raum hin offene Prallfläche des Aussenringes und stösst dabei an dieser entlangkriechendes Lecköl zurück in den abgedichteten Raum. Der Effekt ist nicht punktförmig begrenzt, sondern ist wegen der grossen Anzahl derartiger auf dem Umfang des Flansches verteilt mündender Kanäle sowie der dem Flansch unter Betriebsbedingungen eigenen Drehbewegung vergleichbar einem auf die gesamte Prallfläche kontinuierlich einwirkenden Trocknungsprozess. Kriechöl vermag die Prallfläche daher nicht in axialer Richtung zu passieren. Eine Leckage unter Betriebsbedingungen ist ausgeschlossen.

Der Flansch kann aus den in der europäischen Patentanmeldung 12133 bekannten Materialien bestehen, beispielsweise aus einem Sinterkörper aus regel- oder unregelmässig geformten Kunststoff- oder Metallpartikeln. Der Flansch kann auch aus einer Vielzahl von gelochten und gegebenenfalls mit Prägungen versehenen, kreisringförmigen Scheiben bestehen, die in einem Abstand voneinander auf dem Innenring gelagert sind und die aus Kunststoff oder Metall bestehen können. Die Verwendung von synthetisch hergestellten, offenzelligen Hartschaumstoffen ist möglich, ebensogut die Verwendung von Faser- oder Verbundwerkstoffen aus mehreren der genannten Materialien. Diesbezüglich sind somit grosse Auswahlmöglichkeiten und damit Möglichkeiten der Anpassung an den gegebenen Anwendungsfall gegeben. Mit abnehmender Tröpfchengrösse der Flüssigkeit in dem abgedichteten Medium ist ein abnehmender Porenradius und gegebenenfalls eine Vergrösserung des Querschnittes des Flansches in radialer und/oder axialer Richtung nötig. Der freie Querschnitt der Kanäle sollte etwa dem 8- bis 16fachen freien Querschnitt eines durchschnittlich grossen Durchlasses entsprechen.

Es wird bevorzugt, dass der Winkel zwischen der Erstreckung der Kanäle und dem Profil der Prallfläche 100 bis 170° beträgt. Vorteilhaft innerhalb dieses Bereiches sind Werte zwischen 120 und 150°.

Der Winkel, den die Kanäle mit der Rotationsachse einschliessen, kann kleiner als 90° sein. Ein Wert von etwa 90° erlaubt ohne wesentliche Funktionsbeeinträchtigung grosse radiale Wellenverlagerungen, die beispielsweise während der Anlaufphase von Verbrennungsmotoren auftreten können. Kleinere Werte als 90° ermöglichen demgegenüber eine Verminderung der radialen Breite des Flansches. Die diesbezüglichen Auswahlmöglichkeiten sind jedoch begrenzt durch die Notwendigkeit, die Prallfläche offen in Richtung des abgedichteten Raumes auszubilden, d.h. ohne eine Durchmesserverminderung und vorteilhaft in kegeliger Form erweitert.

Die Kanäle können, in der Vorderansicht betrachtet, ähnlich einem Pumpenlaufrad evolventen- oder evolutenförmig gestaltet sein. Auf diese Weise wird eine grösstmögliche Gasgeschwindigkeit gewährleistet, was die Erzielung eines guten Abdichtungsergebnisses begünstigt.

Die Kanäle können von dem Flansch durch eine flüssigkeitsundurchlässige Grundplatte getrennt sein, der Überströmkanäle im Bereich des Innendurchmessers aufweist. Das nachströmende Gas wird bei einer solchen Ausführung im Bereich des Innendurchmessers in die Kanäle eingeleitet und wird in diesen ohne negative Beeinträchtigung durch Querströme oder rauhe Wandungen auf eine grosse Geschwindigkeit beschleunigt. Grund- und Deckplatte werden zweckmässig bei einer solchen Ausführung als Formteil erzeugt und enthalten bereits in fertiger, optimierter Form Kanäle und Überströmkanäle mit optimal aufeinander abgestimmten Querschnitten.

Die Grundplatte kann den Flansch auf der Aussenseite mit einem in Richtung des abgedichteten Mediums kegelig erweiterten Vorsprung umschliessen. Der ringförmig ausgebildete Vorsprung besteht ebenfalls aus einem flüssigkeitsundurchlässigen Material und er dient der geschlossenen Rückführung der abgeschiedenen Flüssigkeitsbestandteile in den abgedichteten Raum. Unter diesem Gesichtspunkt ist es zu empfehlen, den Vorsprung gegebenenfalls ringförmig über die den Aussenring in axialer Richtung begrenzende Stirnfläche vorzuziehen und gegebenenfalls als Spritzring auszubilden.

Der mittlere Abstand zwischen den Mündungen der Kanäle und der Prallfläche in Richtung der Kanäle soll so beschaffen sein, dass die Prallfläche unter Betriebsbedingung messbar durch die aus den Kanälen austretenden Gasströme beaufschlagt wird. Die Gasströme sollen möglichst ohne Verwirbelung oder Stauung in Richtung des abgedichteten Raumes umgelenkt werden. Dieser Forderung wird bereits in ausreichendem Masse einer Ausführung gerecht, bei der das Verhältnis aus dem Zu- und dem Abströmquerschnitt 0,5 bis 2,5, vorteilhafterweise 0,8 bis 1,8 beträgt.

Der Zuströmquerschnitt ist dabei der Gesamtquerschnitt aller Kanäle an der Mündung, der Abströmquerschnitt ergibt sich vereinfacht als Produkt aus der Länge der Prallfläche in Umfangsrichtung und ihrem Abstand von der Mündung der Kanäle.

Bei einem niedrigeren Verhältnis wird eine nur unzureichende Breitenwirkung erzielt, bei einer Überschreitung des Verhältnisses kommt es demgegenüber zu einem starken Abfall der Strömungsgeschwindigkeit und demzufolge zu einer nur noch unzureichenden Abtrocknung der Prallfläche von daran entlangkriechender Leckflüssigkeit.

In der in der Anlage beigefügten Zeichnung sind einige beispielhafte Ausführungen des erfindungsgemäss vorgeschlagenen Dichtringes dargestellt. Es zeigen:

Figur 1 einen Dichtring in halbgeschnittener Darstellung.

Figur 2 einen Teilausschnitt aus dem Dichtring gemäss Figur 1 entlang der Linie B-B.

Figur 3 eine andere Ausführungsform eines Querschnittes gemäss Figur 2.

Figur 4 einen Schnitt durch einen Dichtring gemäss Figur 1 entlang der Linie A-A.

Figur 5 eine vereinfachte Ausführung in halbgeschnittener Darstellung.

Figur 6 eine nochmals vereinfachte Ausführung in halbgeschnittener Darstellung.

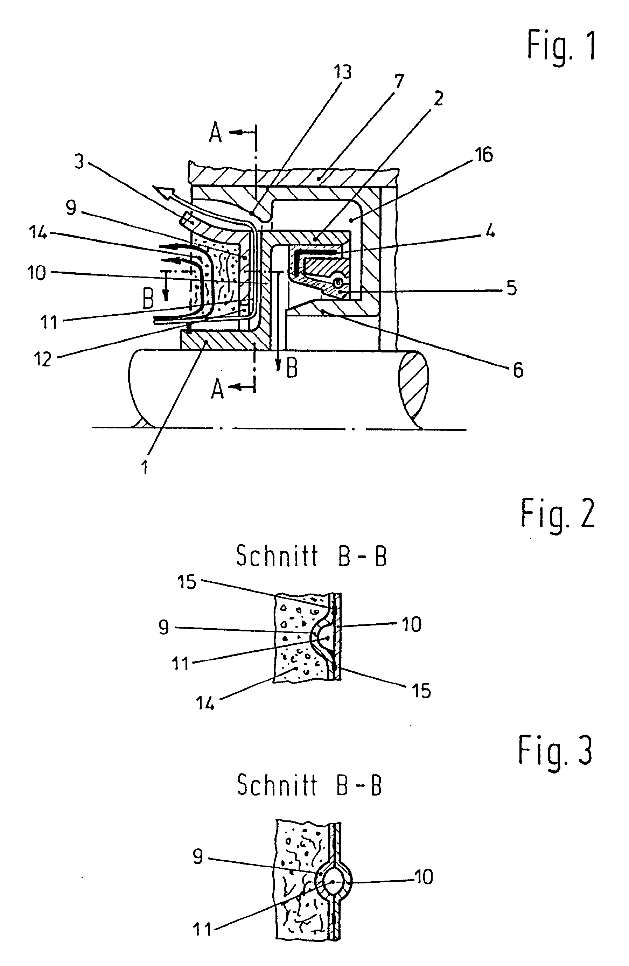

Der Dichtring gemäss Figur 1 besteht aus dem mit der Welle umlaufenden Innenring 1. Dieser hat ein winkliges Profil, aus dem der in Richtung des abgedichteten Mediums kegelig erweiterte Vorsprung 3 und der achsparallele Steg 2 in Richtung der druckabgewandten Seite hervorstehen. In den ringförmig ausgebildeten Steg 2 ist ein üblicher Radialwellendichtring 4 eingepresst, dessen Dichtlippe 5 durch die Kraft einer Ringwendelfeder gegen die Dichtfläche eines sich in axialer Richtung erstreckenden Vorsprunges 6 des Aussenringes 7 angepresst wird. Der Radialwellendichtring 4 wird von der sich drehenden Welle mitbewegt und auf seine Dichtlippe 5 wirken mit zunehmender Drehzahl steigende, nach aussen gerichtete Fliehkräfte ein. Bei Erreichen der Nenndrehzahl ist der gezeigte Berührungskontakt zwischen der Dichtlippe 5 und dem Steg 6 unterbrochen, und damit jeder weitere Verschleiss unterbunden.

Der sich in radialer Richtung erstreckende Bereich des Innenringes 1 zerfällt in die die Kanäle begrenzende Grundplatte 9 und die Deckplatte 10. Grund- und Deckplatte sind durch parallel zur Zeichenebene verlaufende Schaufeln verbunden, die die durch die Überströmkanäle 12 angeströmten Kanäle 11 begrenzen.

Der von dem zylindrischen Innenteil des Innenringes 1, der Grundplatte 9 und dem Vorsprung 3 umschlossene Raum ist mit einem Sinterkörper aus einem Kunststoffgranulat gefüllt, der eine Vielzahl einander in radialer und axialer Richtung durchschneidender Durchlässe aufweist.

Unter Betriebsbedingungen strömt über die dem abgedichteten Raum zugewandte Stirnfläche abgedichtetes Medium, nämlich ein Gemisch aus einer Flüssigkeit und einem Gas in das Porensystem des Sinterkörpers ein. Es wird in diesem durch die Drehbewegung der Welle in Umfangsrichtung beschleunigt und unter der unterschiedlichen Einwirkung der Fliehkräfte in seine Bestandteile zerlegt. Die Flüssigkeitsbestandteile werden zunächst in radialer Richtung nach aussen abgeschieden. Sie sind als ausgefüllte, schwarze Pfeile dargestellt, die unmittelbar nach dem Eindringen des Gemisches in den Sinterkörper in dem abgedichteten Raume münden.

Die Gasbestandteile verbleiben demgegenüber wesentlich länger in dem Porensystem des Sinterkörpers und werden durch die Überströmkanäle 12 den Kanälen 11 zugeführt und auf eine hohe, radiale Geschwindigkeit beschleunigt. Sie treffen nach dem Verlassen der Mündungen der Kanäle auf die stumpfwinklig zugeordnete Prallfläche 13, die in Richtung des abgedichteten Raumes kegelig erweitert ist. Sie werden dadurch umgelenkt und gelangen getrennt von den flüssigen Bestandteilen zurück in den abgedichteten Raum. Der Weg wurde mit Hilfe eines nicht gefüllten Pfeiles skizziert. Wegen der Vielzahl der die Prallfläche in Umfangsrichtung kontinuierlich passierenden Kanäle vermag Kriechflüssigkeit diese in axialer Richtung nicht zu passieren und die druckabgewandte Seite des Dichtringes zu erreichen.

Mit Figur 2 wird der Aufbau des Innenringes anhand einer quergeschnittenen Darstellung verdeutlicht. Dieser besteht im wesentlichen aus dem das Porensystem enthaltenden Flansch 14, der vorgeformten Grundplatte 9 mit nicht sichtbarem, kegeligem Vorsprung 3 sowie der vorgeformten Deckplatte 10, die ein Z-förmiges Profil aufweist mit dem nicht sichtbaren, in Richtung der druckabgewandten Seite am Aussenumfang vorspringenden Steg 2. Die den Innenumfang begrenzende Hülse ist durch einen Presssitz auf der Welle verankert. Abzudichtendes Medium vermag dadurch entlang der Oberfläche der Welle den abgedichteten Raum nicht zu verlassen.

Der Flansch 14 besteht aus einem Sinterkörper aus untereinander verklebten Polyamidpartikeln mit einem Durchmesser von 1,8 mm. Auch die die Grund- und Deckplatte enthaltenden Formteile 9 und 10 bestehen aus Polyamid. Sie sind entlang der sich senkrecht zur Zeichenebene erstreckenden Linien 15 untereinander verschweisst.

Figur 3 nimmt Bezug auf eine alternative Ausführungsform bezüglich der Ausbildung der Kanäle. Die Herstellung und Verbindung der die Grundplatte 9 und die Deckplatte 10 enthaltenden Formteile entspricht den vorstehenden Ausführungen. Die Deckplatte 10 enthält zusätzliche, den Querschnitt der Kanäle 11 erweiternde Ausbuchtungen, was den Gasdurchsatz begünstigt. Durch die rückseitig vortretenden Rippen wird eine Gasumwälzung innerhalb des dem Lippenringe 4 vorgeschalteten Raumes erreicht, was die Kühlung der Dichtlippe in der Anlaufphase begünstigt. Eine Luftströmung aus der Zone niedrigeren Druckes über den Zwischenraum 16 in den abgedichteten Raum kommt auch nach dem Abheben der Dichtlippe von der Dichtfläche 6 nicht zustande, was von wesentlicher Bedeutung ist in bezug auf die Vermeidung einer unerwünschten Absammlung von Staub und anderen Fremdstoffen in dem abgedichteten Raum.

Bei dem Dichtring gemäss Figur 1 verlaufen die Kanäle in radialer Richtung, was die Herstellung vereinfacht. Sie sind der Rotationsachse unter einem rechten Winkel zugeordnet, was günstige Bedingungen für den Ausgleich radialer Wellenschwingungen gewährleistet der Prallfläche 13 unter einem Winkel von 127°. Der Winkel vermindert sich allmählich in Richtung des abgedichteten Raumes.

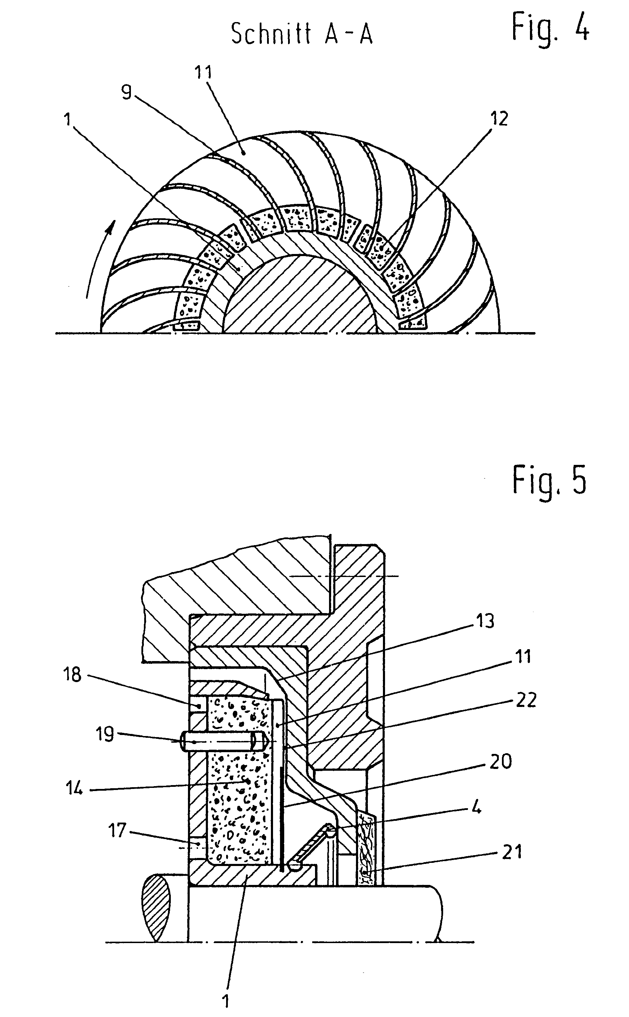

Figur 4 zeigt einen Dichtring ähnlich Figur 1, geschnitten entlang der Linie A-A. Die von der schaufelartige Erhebungen aufweisenden Grundplatte 9 umschlossenen Kanäle 11 haben einen evolventenförmigen Verlauf. Die durch die Überströmkanäle 12 in die Kanäle 11 eintretenden Gasmengen werden dadurch auf eine besonders grosse Geschwindigkeit in radialer Richtung beschleunigt, was die erzielte Abdichtungswirkung beim Auftreffen auf die nicht gezeigte Prallfläche 13 begünstigt. Die Funktion ist abhängig von der durch einen Pfeil angedeuteten Drehrichtung. Die vorstehend beschriebene Ausführung, bei der die Kanäle sich in radialer Richtung erstrecken, hat demgegenüber eine von der Drehrichtung unabhängige Funktion.

Figur 5 zeigt eine Ausführung, bei der der offenporige Flansch 14 in einer ringförmigen Nute des Innenringes 1 gelagert ist. Die Drehbewegung wird durch Stifte 19 auf den Flansch übertragen, eine axiale Verlagerung wird durch die flüssigkeitsundurchlässige Scheibe 20 verhindert.

Der Flansch 14 besteht aus einem kunstharzgebundenen Metallfaservlies. In die druckabgewandte Stirnfläche sind sich in radialer Richtung erstreckende Kanäle 11 eingeformt. Sie werden in axialer Richtung auf der druckabgewandten Seite im Bereich des Aussenumfanges durch eine nach innen vorspringende Verjüngung des Aussenringes abgeschlossen und bilden dadurch kontinuierliche Strömungskanäle über die gesamte radiale Erstreckung.

Die im Bereich des Aussenumfanges angeordneten Mündungen der Kanäle sind unter einem Winkel von 145° auf die stumpfwinklig zugeordnete Prallfläche 13 ausgerichtet. Die unter Betriebsbedingungen aus den Kanälen herausgeförderten Gasmengen vermögen dadurch an der Prallfläche 13 entlangkriechende Leckflüssigkeit zurück in den abgedichteten Raum zu fördern. Die zuvor aus der Strömung des abzudichtenden Mediums abgeschiedenen Flüssigkeitsbestandteile verlassen den porösen Flansch über die Öffnungen 18 des Innenringes. Die Nachführung abzudichtenden Mediums erfolgt über die axialen Aussparungen 17 im Bereich des Innenumfanges.

Der beschriebenen, dynamisch wirkenden Dichtung ist ein drehzahlabhängiger Dichtring 4 nachgeschaltet sowie eine gleitend auf der Oberfläche der Welle aufliegende Staublippe 21. Das Funktionsprinzip des Lippenringes 4 entspricht dem vorstehend bereits erläuterten. Um eine unerwünschte Ansaugung von Staub aus der Umgebung unter Betriebsbedingungen zu verhindern, hat es sich als zweckmässig erwiesen, den axialen Abstand zwischen der die Kanäle 11 enthaltenden Stirnfläche des Flansches 14 und der nach innen vorspringenden Verjüngung 22 des Aussenringes auf ein möglichst geringes Mass einzustellen und gegebenenfalls den Aussendurchmesser der Scheibe 20 über den Innendurchmesser der Verjüngung 22 um ein gewisses Mass hinaus zu vergrössern.

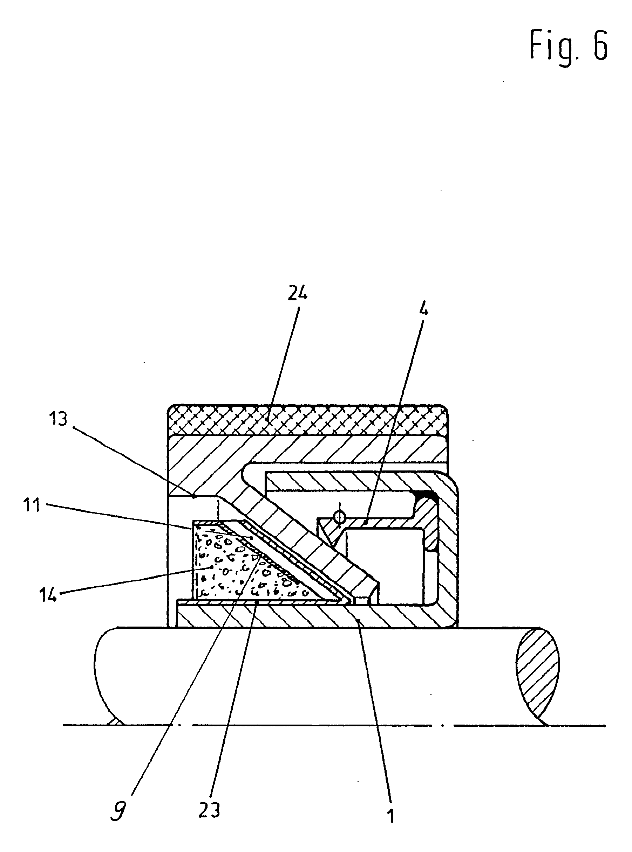

Figur 6 nimmt Bezug auf eine Ausführung, bei der der Innenring und der Aussenring zu einer geschlossenen Baueinheit vereint sind. Beide Ringe können insofern gemeinsam montiert und demontiert werden, ohne dass es besonderer Einstellarbeiten bedarf.

Der Innenring weist ein U-förmig in Richtung des abgedichteten Raumes geöffnetes Profil auf, in dessen Hohlraum ein spitzwinklig nach innen geneigter Schenkel des Aussenringes hineinragt. Auf dem Aussenumfang dieses Schenkels liegt die drehzahlabhängige Lippendichtung 4 auf, während der nach innen weisenden Oberfläche der in radialer und in axialer Richtung Durchbrechungen aufweisende Flansch 14 zugeordnet ist. Der Flansch weist auf der druckabgewandten Seite der Rotationsachse unter einem Winkel von 60° zugeordnete Kanäle 11 auf. Ihre Erstreckung schliesst mit der Prallfläche 13 einen Winkel von 143° ein. Der Flansch besteht aus zusammengesinterten Kunststoffpartikeln aus PTFE mit einem durchschnittlichen Korndurchmesser von 1,5 mm. Die Kanäle 11 haben einen freien Querschnitt von 4,8 mm².

Der Flansch 14 ist auf der innen- und auf der druckabgewandten, Seite mit der Oberfläche des in sich geschlossenen Blechformteiles 23 verklebt. Dieses dient zugleich der unverrückbaren Verankerung auf den zylindrischen Teil des Innenringes 1 und der Ausbildung einer glatten Begrenzungsfläche für die Kanäle 11. Es umschliesst eine angeschweisste Grundplatte 9 mit eingeformten Kanälen 11 und bewirkt zugleich eine Abstützung des Flansches in radialer Richtung beim Auftreten von Fliehkräften. Die dem abgedichteten Medium zugewandte Stirnfläche ist durch ein Lochblech mit einem Offenflächenanteil von 62% abgedeckt, das mit dem zylindrischen Innen- und Aussenteil des Blechformteils verlötet ist.

Der Aussenring ist aussenseitig mit einer Beschichtung 24 aus einem weichelastischen Gummi versehen. Er federt dadurch nach dem gemeinsamen Einpressen mit dem Innenring in die Bohrung eines Maschinenteiles um ein gewisses Mass zurück, wodurch sich selbsttätig das gewünschte und erforderliche axiale Spiel zwischen beiden Teilen ergibt.

**Patentansprüche**

1. Dichtring, bestehend aus einem mit der Welle umlaufenden Innenring (1) mit daran befestigter Dichtlippe (5), die bei Wellenstillstand federnd an dem Aussenring (7) anliegt und sich bei Betriebsdrehzahl von letzterem abhebt, aus einem vorgeschalteten, verdrehsicher mit dem Innenring (1) verbundenen Flansch (14) mit axialen Durchlässen, die über die Stirnfläche verteilt münden und die jeweils von einer Vielzahl sich nach aussen erstreckender Durchlässe durchdrungen sind, welche mit ihren Mündungen auf eine ringförmige, zum abgedichteten Raum hin offene Prallfläche (13) des Aussenringes (7) ausgerichtet sind, dadurch gekennzeichnet, dass die sich nach aussen erstreckenden Durchlässe des Flansches (14) auf der druckabgewandten Seite in ihrem Querschnitt zu Kanälen (11) erweitert sind, die durch eine Deckplatte (10) und/oder eine in geringem axialen Abstand zugeordnete, nach innen vorspringende Verjüngung (22) des Aussenringes (7) abgeschlossen sind, dass die Kanäle (11) gleichmässig auf dem Umfang verteilt münden und dass die Mündungen der Prallfläche (13) des Aussenringes (7) stumpfwinklig zugeordnet sind.

2. Dichtring nach Anspruch 1, dadurch gekennzeichnet, dass der Querschnitt der Kanäle (11) 8- bis 16mal so gross ist wie der durchschnittliche, freie Querschnitt der Durchlässe.

3. Dichtring nach Anspruch 1 bis 2, dadurch gekennzeichnet, dass der Winkel zwischen der Erstreckung der Kanäle und dem Profil der Prallfläche (13) 100 bis 170° beträgt.

4. Dichtring nach Anspruch 1 bis 2, dadurch gekennzeichnet, dass der Winkel zwischen der Erstreckung der Kanäle (11) und dem Profil der Prallfläche (13) 120 bis 150° beträgt.

5. Dichtring nach Anspruch 1 bis 4, dadurch gekennzeichnet, dass die Erstreckung der Kanäle der Rotationsachse unter einem Winkel von etwa 90° zugeordnet ist.

6. Dichtring nach Anspruch 1 bis 5, dadurch gekennzeichnet, dass die Kanäle (11), in der Vorderansicht betrachtet, evolventen- oder evolutenförmig gestaltet sind.

7. Dichtring nach Anspruch 1 bis 6, dadurch gekennzeichnet, dass die Kanäle (11) von dem Flansch (14) durch eine flüssigkeitsundurchlässige Grundplatte (9) getrennt sind, die Überströmkanäle (12) im Bereich des Innenumfanges aufweist.

8. Dichtring nach Anspruch 7, dadurch gekennzeichnet, dass die Grundplatte (9) den Flansch (14) auf der Aussenseite mit einem in Richtung des abgedichteten Mediums kegelig erweiterten Vorsprung (3) umschliesst.

9. Dichtring nach Anspruch 8, dadurch gekennzeichnet, dass der Vorsprung das Profil des Aussenringes in axialer und/oder in radialer Richtung überragt und dass der Vorsprung als Spritzring ausgebildet ist.

10. Dichtring nach Anspruch 1 bis 8, dadurch gekennzeichnet, dass das Verhältnis aus dem Zu- und dem Abströmquerschnitt 0,5 bis 2,5 beträgt.

## Claims

1. A seal ring, comprising an inner ring (1) which rotates with the shaft and has fixed to it a seal lip (5) which sits in resilient manner against an outer ring (7) when the shaft is stopped and lifts from the outer ring when running at operating speed, the seal ring also comprising a flange (14) which is arranged on the upstream side, is connected to the inner ring (1) such that it cannot rotate and has axial passages opening out in a distributed manner over the end face and penetrated in each case by a plurality of outwardly extending passages which are aligned with their openings towards an annular baffle surface (13) of the outer ring (7), the baffle being open in the direction of the sealed space, characterized in that the outwardly extending passages of the flange (14) are widened in their cross-section on the side remote from the pressure to form channels (11) which are closed by a cover plate (10) and/or an inwardly projecting constricted portion (22) of the outer ring (7), which constricted portion (22) is arranged at a small axial distance, that the channels (11) open out in a uniformly distributed manner on the periphery and that the openings of the baffle surface (13) of the outer ring (7) are arranged at an obtuse angle.

2. A seal ring according to claim 1, characterized in that the cross-section of the channels (11) is eight to sixteen times as large as the average, free cross-section of the passages.

3. A seal ring according to claim 1 or 2, characterized in that the angle between the extent of the channels and the section of the baffle surface (13) is 100 to 170°.

4. A seal ring according to claim 1 or 2, characterized in that the angle between the extent of the channels (11) and the section of the baffle surface (13) is 120 to 150°.

5. A seal ring according to any of claims 1 to 4, characterized in that the extent of the channels is arranged at an angle of about 90° to the axis of rotation.

6. A seal ring according to any of claims 1 to 5, characterized in that the channels (11), as seen in front view, are designed in an involute or evolute form.

7. A seal ring according to any of claims 1 to 6, characterized in that the channels (11) are separated from the flange (14) by a base plate (9) which is impermeable to fluid and has overflow channels (12) in the area of the inner periphery.

8. A seal ring according to claim 7, characterized in that the base plate (9) encloses the flange (14) on the outer side with a projection (3) which is conically widened in the direction of the sealed medium.

9. A seal ring according to claim 8, characterized in that the projection protrudes beyond the section of the outer ring in the axial and/or radial direction and that the projection is made as a splash ring.

10. A seal ring according to any of claims 1 to 8, characterized in that the ratio of the inflow cross-section to the outflow cross-section is 0.5 to 2.5.

## Revendications

1. Bague d'étanchéité constituée d'une bague intérieure (1) tournant avec l'arbre avec une lèvre d'étanchéité (5) qui y est fixée et qui appuie elastiquement sur la bague extérieure (7) en position d'arrêt et qui se détache de cette dernière à la vitesse de fonctionnement, d'une bride (14) montée en amont et fixée, sans possibilité de rotation, sur la bague intérieure (1) qui comporte des passages axiaux dont les sorties sont réparties sur la surface frontale et qui sont traversés chacun par un grand nombre de passages s'étendant vers l'extérieur et dont les sorties sont tournées vers une chicane (13) annulaire de la bague extérieure (7) ouverte vers l'enceinte à fermer, caractérisée en ce que les passages de la bride (14) s'étendant vers l'extérieur ont une section élargie du côté opposé à la pression, pour constituer des canaux (11) qui sont fermés par une plaque de recouvrement (10) et/ou un rétrécissement (22) de la bague extérieure (7) faisant saillie vers l'intérieur et disposés à une faible distance axiale, en ce que les canaux (11) ont des sorties réparties uniformément sur la périphérie et en ce que les sorties sont disposées à angle obtus par rapport à la chicane (13) de la bague extérieure (7).

2. Bague d'étanchéité selon la revendication 1, caractérisé en ce que la section des canaux (11) est 8 à 16 fois plus grande que la section libre moyenne des passages.

3. Bague d'étanchéité selon la revendication 1 à 2, caractérisée en ce que l'angle entre le prolongement des canaux et le profil de la chicane (13) est de 100 à 170°.

4. Bague d'étanchéité selon les revendications 1 et 2, caractérisée en ce que l'angle entre le prolongement des canaux (11) et le profil de la chicane (13) est de 120 à 150°.

5. Bague d'étanchéité selon les revendications 1 à 4, caractérisée en ce que le prolongement des canaux forme, avec l'axe de rotation, un angle d'environ 90°.

6. Bague d'étanchéité selon les revendications 1 à 5, caractérisée en ce que les canaux (11), vus par l'avant, présentent une forme en développante ou en développé.

7. Bague d'étanchéité selon les revendications 1 à 6, caractérisée en ce que les canaux (11) sont séparés de la bride (14) par une plaque de base (9) imperméable aux liquides, qui présente des canaux de trop-plein (12) dans la zone de la périphérie intérieure.

8. Bague d'étanchéité selon la revendication 7, caractérisée en ce que la plaque de base (9) entoure la bride (14) du côté extérieur par une saillie s'élargissant en forme de cône en direction du fluide à contenir.

9. Bague d'étanchéité selon la revendication 8, caractérisée en ce que la saillie dépasse le profil de la bague extérieure en direction axiale et/ou radiale et en ce que la saillie est disposée sous forme de bague de protection.

10. Bague d'étanchéité selon la revendication 1 à 8, caractérisée en ce que le rapport des sections d'adduction et d'évacuation est de 0,5 à 2,5.

Fig. 1

Fig. 2

Schnitt B - B

Fig. 3

Schnitt B - B

Schnitt A – A

Fig. 4

Fig. 5

Fig. 6